# EUROPEAN PATENT APPLICATION

(11) **EP 4 249 315 A1**
(43) Date of publication of application: **27.09.2023**
(21) Application number: 23162136.8
(22) Date of filing: 15.03.2023
(51) Int. Cl.: B60L 53/12, B60L 3/12, B60L 53/66

(54) **SERVER, POWER TRANSFER SYSTEM, AND POWER TRANSFER METHOD FOR CHARGING ELECTRIC VEHICLES WIRELESSLY ALONG A LANE ON A ROAD**

(30) Priority: 22.03.2022 JP 2022045258
(71) Applicant: TOYOTA JIDOSHA KABUSHIKI KAISHA, Aichi-Ken 471-8571 (JP)
(72) Inventor: EHARA, Masato, Toyota-shi 471-8571 (JP); YOKOYAMA, Daiki, Toyota-shi 471-8571 (JP); TAKAHASHI, Yuki, Toyota-shi 471-8571 (JP); TAKAHASHI, Tomoya, Toyota-shi 471-8571 (JP); KUBOTA, Tomoyuki, Toyota-shi 471-8571 (JP); TOYORA, Sachio, Toyota-shi 471-8571 (JP); FUKUOKA, Keisuke, Toyota-shi 471-8571 (JP); XU, Zidan, Toyota-shi 471-8571 (JP); LIANG, Wenfeng, Toyota-shi 471-8571 (JP); MURATA, Hiroki, Toyota-shi 471-8571 (JP)
(74) Representative: D Young & Co LLP

(57) **Abstract**

A power transfer method between vehicles (3) that are traveling and power transfer devices (2) in a non-contact manner includes acquiring, for each of the vehicles (3), a traveling plan for a specific vehicle (3) among the vehicles (3), estimating a power change amount according to power consumption or power regeneration of the specific vehicle (3) that is traveling based on the traveling plan, and setting a power transfer amount between the specific vehicle (3) and a corresponding power transfer device (2) such that the power transfer amount corresponds to the power change amount. The corresponding power transfer device (2) is a device corresponding to the specific vehicle (3) among the power transfer devices (2).

## Description

### BACKGROUND OF THE INVENTION

### 1. Field of the Invention

The present disclosure relates to a server, a power transfer system, and a power transfer method, and, more particularly, to a power transfer technology for transferring power between vehicles in a non-contact manner.

### 2. Description of Related Art

Japanese Unexamined Patent Application Publication No. 2015-95983 (JP 2015-95983 A) discloses a charging/discharging management system that manages charging to and discharging from a battery electric vehicle. The charging/discharging management system sets a charging period for which power charged in the battery electric vehicle is economically used, and sets a discharging period for which power discharged from the battery electric vehicle is economically used. JP 2015-95983 A shows a form in which power is transferred between a charging/discharging stand and the battery electric vehicle in the non-contact manner.

### SUMMARY OF THE INVENTION

A power transfer system has been proposed that executes non-contact power transfer between a plurality of power transfer devices installed in a traveling lane and a plurality of vehicles that are traveling in the traveling lane. In such a power transfer system, it is not determined which vehicle travels in which lane at what timing. Therefore, there is room for improvement in how to set a power amount transferred between a plurality of power transfer devices and a plurality of vehicles.

The present disclosure provides a server, a power transfer system, and a power transfer method that appropriately set a power transfer amount in the power transfer system.

A server according to a first aspect of the present disclosure is configured to manage a plurality of power transfer devices configured to execute a non-contact power transfer with vehicles that are traveling. The server includes a communicator configured to acquire a traveling plan by communicating with the vehicles, and a processor configured to set power transferred between the vehicles and the power transfer devices. The processor is configured to, for each of the vehicles, estimate a power change amount according to power consumption or power regeneration of a specific vehicle among the vehicles that are traveling based on the traveling plan, and set a power transfer amount between the specific vehicle and a corresponding power transfer device such that the power transfer amount corresponds to the power change amount. The corresponding power transfer device is a device corresponding to the specific vehicle among the power transfer devices.

In the first aspect, the processor may be configured to estimate, for each of the vehicles, a power consumption amount according to powering traveling of the specific vehicle based on the traveling plan, and set a power transmission amount from the corresponding power transfer device to the specific vehicle such that the power transmission amount corresponds to the power consumption amount.

In the first aspect, the processor may be configured to estimate, for each of the vehicles, a surplus power amount according to regenerative power generation of the specific vehicle based on the traveling plan, and set a power reception amount of the corresponding power transfer device from the specific vehicle such that the power reception amount corresponds to the surplus power amount.

In the first aspect, the traveling plan may include information on at least one of speed, acceleration, an accelerator opening degree, a braking amount, a scheduled traveling route, and a slope of the scheduled traveling route.

In the first aspect, the power transfer devices may be electrically connected to a power grid interconnected to a power system, the processor may be configured to set the power transfer amount to correspond to the power change amount in a case where a demand response request for executing a power adjustment of the power grid is not generated during a specific time range, and the specific time range may be a time range when power supply and demand of the power system is tight.

In the first aspect, the processor may be configured to acquire, in a case where the demand response request is generated, a power request amount for which the power adjustment is requested to the power transfer devices to execute the power adjustment of the power grid, and set, in the case where the demand response request is generated, a total power amount transferred between the vehicles and the power transfer devices such that the total power amount corresponds to the power request amount.

A power transfer system according to a second aspect of the present disclosure includes the server and the power transfer devices.

A third aspect of the present disclosure is a power transfer method between vehicles that are traveling and power transfer devices in a non-contact manner. The power transfer method includes acquiring, for each of the vehicles, a traveling plan for a specific vehicle among the vehicles, estimating a power change amount according to power consumption or power regeneration of the specific vehicle that is traveling based on the traveling plan, and setting a power transfer amount between the specific vehicle and a corresponding power transfer device such that the power transfer amount corresponds to the power change amount. The corresponding power transfer device is a device corresponding to the specific vehicle among the power transfer devices.

With each aspect of the present disclosure, it is possible to appropriately set a power transfer amount in a power transfer system.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating a schematic configuration of a power system including a non-contact power transfer system according to a first embodiment of the present disclosure;
FIG. 2 is a diagram illustrating a configuration of the non-contact power transfer system;
FIG. 3 is a diagram illustrating a typical configuration of each of a charging lane and a vehicle;
FIG. 4 is a diagram schematically illustrating an example of a configuration of each of a server and the vehicle;
FIG. 5 is a diagram for describing a long-term plan;
FIG. 6 is a diagram for describing a short-term plan;
FIG. 7 is a functional block diagram of an application server according to the first embodiment;
FIG. 8 is a diagram for describing arithmetic processing by a power transfer amount setting unit in the first embodiment;
FIG. 9 is a flowchart illustrating processing procedures on setting of the power transfer amount in the first embodiment;
FIG. 10 is a functional block diagram of an application server in a second embodiment;
FIG. 11 is a diagram for describing arithmetic processing by a power transfer amount setting unit in the second embodiment; and
FIG. 12 is a flowchart illustrating processing procedures on setting of the power transfer amount in the second embodiment.

### DETAILED DESCRIPTION OF EMBODIMENTS

Hereinafter, embodiments of the present disclosure will be described in detail with reference to the drawings. The same or corresponding parts in the drawings are denoted by the same reference signs, and the description thereof will not be repeated.

### First Embodiment

### Overall Configuration of Power System

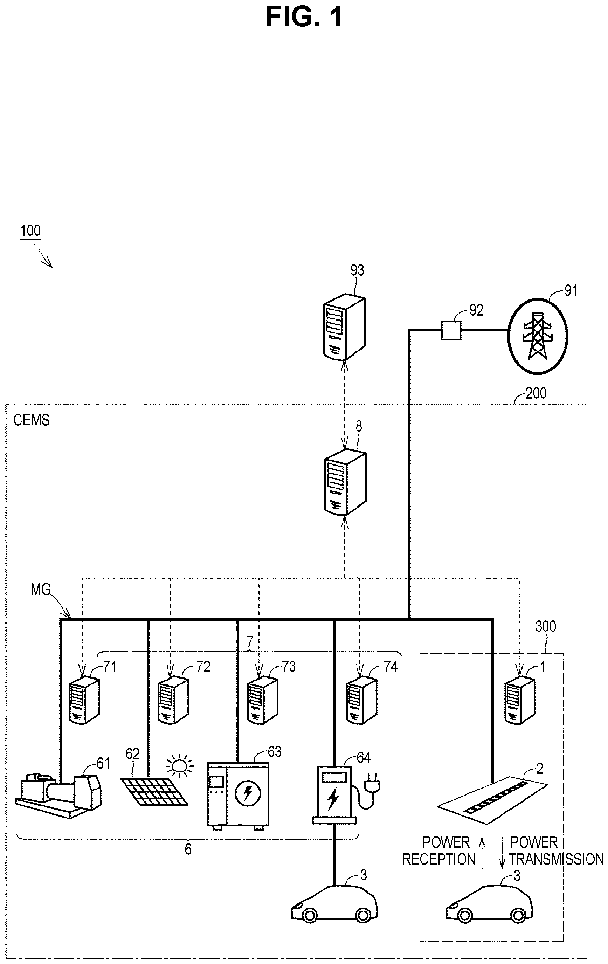

FIG. 1 is a diagram illustrating a schematic configuration of a power system including a power transfer system according to a first embodiment of the present disclosure. A power system 100 includes a power system 91, power reception/conversion equipment 92, a power transmission/distribution business operator server 93, and a CEMS 200. CEMS means a community energy management system or a city energy management system.

The power system 91 is a power network constructed by power generation plants and power transmission/distribution equipment. In the present embodiment, a power company serves as both a power generation business operator and the power transmission/distribution business operator. The power company corresponds to a general power transmission/distribution business operator and a manager of the power system 91, and maintains and manages the power system 91.

The power reception/conversion equipment 92 is provided at an interconnection point of a microgrid MG (described below) constructed in the CEMS 200, and is configured to switch interconnection/disconnection between the microgrid MG and the power system 91. When the microgrid MG and the power system 91 are connected, the power reception/conversion equipment 92 receives alternating current power of special high voltage (for example, voltage exceeding 7,000 V) from the power system 91, steps down received power, and supplies it to the microgrid MG.

The power transmission/distribution business operator server 93 is a computer belonging to the power transmission/distribution business operator (the power company) and managing power supply and demand of the power system 91. The power transmission/distribution business operator server 93 is configured to be capable of bidirectionally communicating with a CEMS server 8 (described below).

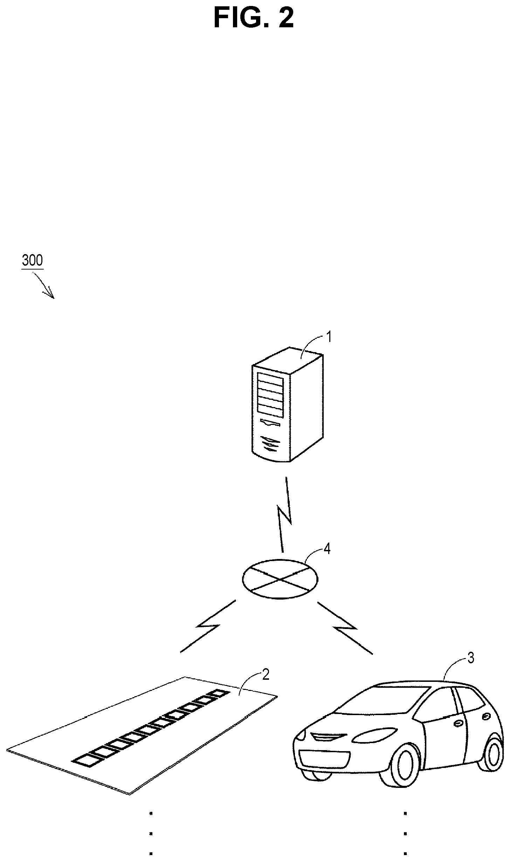

The CEMS 200 includes a plurality of power adjustment resources 6, a plurality of servers 7, the CEMS server 8, and a non-contact power transfer system 300. The non-contact power transfer system 300 is an example of the "power transfer system" according to the present disclosure. The non-contact power transfer system 300 will be described in detail with reference to FIG. 2 and subsequent drawings.

The power adjustment resources 6 includes a generator 61, a naturally fluctuating power source 62, an energy storage system (ESS) 63, and electric vehicle supply equipment (EVSE) 64. A microgrid MG in the CEMS 200 is constructed by these power adjustment resources.

The generator 61 is power generation equipment that does not depend on weather conditions, and outputs generated power to the microgrid MG. Examples of the generator 61 include a steam turbine generator, a gas turbine generator, a diesel engine generator, a gas engine generator, a biomass generator, and a stationary fuel cell. An example of the generator 61 may include a co-generation system that utilizes heat generated during power generation.

The naturally fluctuating power source 62 is power generation equipment in which a power generation output fluctuates depending on the weather conditions, and outputs generated power to the microgrid MG. Although solar power generation equipment (a solar panel) is exemplified in FIG. 1, an example of the naturally fluctuating power source 62 may include wind power generation equipment instead of or in addition to the solar power generation equipment.

The ESS 63 is a stationary power source that accumulates power generated by the naturally fluctuating power source 62 and the like. The ESS 63 is a secondary battery, such as a lithium-ion battery or a nickel-hydrogen battery (a recycled product) used in a vehicle. However, an example of the ESS 63 is not limited to the secondary battery, and may be a power-to-gas device that produces a gaseous fuel (for example, hydrogen and methane) using surplus power.

The EVSE 64 may be a charger installed at a home or a commercial or public charging station. The EVSE 64 is electrically connected to the microgrid MG. The EVSE 64 is configured to be able to charge the vehicle 3 with power from the microgrid MG, and supply power from the vehicle 3 to the microgrid MG.

As power adjustment resources other than the above, the CEMS 200 further includes, for example, a factory energy management system (FEMS), a building energy management system (BEMS), and a home energy management system (HEMS). Further, the number of power adjustment resources included in the CEMS 200 is arbitrary. The CEMS 200 may include a plurality of power adjustment resources of the same type, or may not include some types of power adjustment resources.

The servers 7 include servers 71 to 74. The servers 71 to 74 are provided corresponding to the generator 61, the naturally fluctuating power source 62, the ESS 63, and the EVSE 64, respectively, and manage the corresponding power adjustment resources.

The CEMS server 8 includes a processor, a memory, and a communication interface (none of which are shown). The processor is configured to execute predetermined arithmetic processing for managing the power adjustment resources 6. The memory stores a program executed by the processor, and stores various pieces of information (for example, a map, a relational formula, and a parameter) used in the program. The communication interface is configured to communicate with other servers (the power transmission/distribution business operator server 93, the servers 71 to 74, and a server 1).

The CEMS server 8 may be, for example, an aggregator server, and in response to a demand response (DR) request from the power transmission/distribution business operator server 93, manages the power adjustment resources 6 within the CEMS 200 while cooperating with other servers. More specifically, the CEMS server 8 allocates (distributes) a power adjustment amount obtained by the DR request from the power transmission/distribution business operator server 93 to the power adjustment resources 6.

### Configuration of Non-contact Power Transfer System

FIG. 2 is a diagram illustrating a configuration of the non-contact power transfer system 300. The non-contact power transfer system 300 includes the server 1, a plurality of charging lanes 2, and a plurality of vehicles 3.

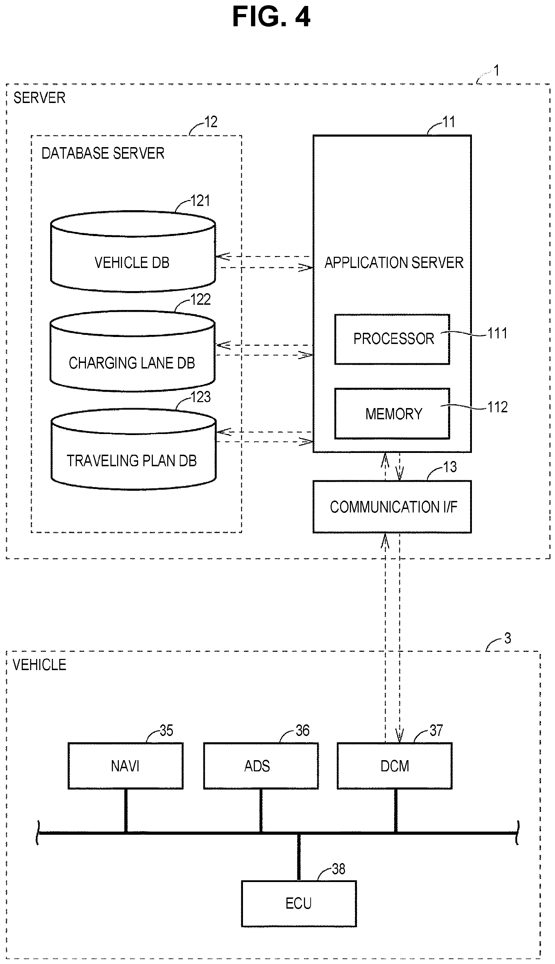

The server 1, the charging lanes 2, and the vehicles 3 are configured to be capable of communicating with each other via a communication network 4. The server 1 manages the power adjustment resources (the charging lane 2 and the vehicle 3) in the non-contact power transfer system 300 while cooperating with the CEMS server 8 (see FIG. 1). A detailed configuration of the server 1 will be described in FIG. 4.

The charging lanes 2 are installed on a road surface of the traveling lane of the vehicles 3, and are configured to enable to bidirectionally transfer power in a non-contact manner with the vehicles 3 that are traveling. The charging lanes 2 may be installed on a side wall of the traveling lane. The charging lanes 2 are examples of "a plurality of power transfer devices" according to the present disclosure.

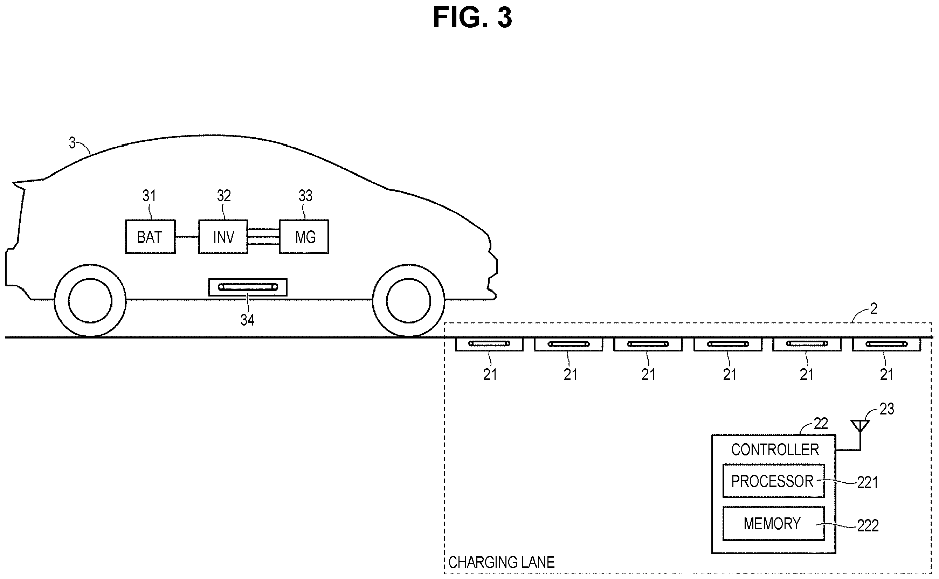

FIG. 3 is a diagram illustrating a typical configuration of each of the charging lane 2 and the vehicle 3. Although one charging lane 2 and one vehicle 3 are shown in FIG. 3, in reality, a large number of charging lanes 2 are installed and a large number of vehicles 3 are traveling.

The vehicle 3 is an electrified vehicle, and, more specifically, a battery electric vehicle (BEV), a plug-in hybrid electric vehicle (PHEV), or a fuel cell electric vehicle (FCEV). The vehicle 3 includes a battery 31, an inverter 32, a motor generator 33, and a power transfer unit 34.

The battery 31 is an assembled battery including a plurality of cells. Each cell is a secondary battery, such as a lithium-ion battery or a nickel-hydrogen battery. The battery 31 supplies power used for generating a drive force of the vehicle 3 to the motor generator 33. Further, the battery 31 accumulates power generated by the motor generator 33.

The inverter 32 converts direct current power accumulated in the battery 31 into alternating current power and supplies the alternating current power to the motor generator 33. Further, the inverter 32 converts alternating current power (regenerative power) from the motor generator 33 into direct current power and charges the battery 31 with the direct current power.

The motor generator 33 causes the vehicle 3 to travel by receiving power supplied from the inverter 32 and applying a rotational force to drive wheels. Further, when executing the regenerative power generation at a time of braking the vehicle 3, the motor generator 33 generates regenerative power and supplies the generated alternating current power (regenerative power) to the inverter 32.

The power transfer unit 34 is arranged on, for example, a bottom surface of a floor panel that forms a bottom surface of the vehicle 3. A power reception coil is accommodated in the power transfer unit 34. The power reception coil receives power transferred from the charging lane 2 in a non-contact manner. Alternating current power received by the power transfer unit 34 is converted into direct current power by an inverter (not shown), and charges the battery 31. Alternating current power received by the power transfer unit 34 can also be used to drive the motor generator 33.

The charging lane 2 includes a plurality of power transfer units 21 and a controller 22. Although a configuration example in which six power transfer units 21 are installed is illustrated in FIG. 3, the number of power transfer units 21 is not particularly limited, and may be higher.

The power transfer units 21 are arranged in a line in the traveling lane of the vehicle 3. Each of the power transfer units 21 includes a power transmission coil. Each power transmission coil is electrically connected to an alternating current power source (not shown). Although not shown, a sensor (for example, an optical sensor and a weight sensor) used for detecting passage of the vehicle 3 is provided in each of the power transfer units 21.

The controller 22 controls power transfer (power transmission) from the power transfer units 21 to the vehicle 3 in a non-contact manner, using a communication module 23. The controller 22 includes a processor 221 and a memory 222.

More specifically, the controller 22 specifies a traveling position of the vehicle 3 based on a detection signal from each sensor. Then, the controller 22 supplies alternating current power from an alternating current power source to a power transmission coil of a power transfer unit 21 on which the vehicle 3 is positioned from among the power transfer units 21. In such a manner, alternating current flows through the power transmission coil, and an electromagnetic field is formed around the power transmission coil. The power reception coil in the power transfer unit 34 receives power through the electromagnetic field in the non-contact manner. Thereafter, when the vehicle 3 on the power transfer unit 21 is no longer detected, the controller 22 stops supplying alternating current power to the power transmission coil. By executing such a series of control for each power transfer unit 21, power can be transferred to the vehicle 3 that is traveling in the non-contact manner.

Here, the configuration in which power transmission is executed from the charging lane 2 to the vehicle 3 has been described. However, power transmission from the vehicle 3 to the charging lane 2 is also possible. In other words, the power transfer unit 34 of the vehicle 3 is configured to be also capable of power transmission to the power transfer unit 21 of the charging lane 2. The power transfer unit 21 of the charging lane 2 is configured to be also capable of power reception from the power transfer unit 34 of the vehicle 3.

A power generation amount regarding, for example, the generator 61 (see FIG. 1) can be arbitrarily set. The power generation amount regarding the naturally fluctuating power source 62 can also be estimated based on the weather conditions of an area in which the naturally fluctuating power source is installed. In contrast, in the non-contact power transfer system 300, it is not determined which vehicle travels in which lane at what timing. Therefore, how to set a power amount transferred between the charging lanes 2 and the vehicles 3 can be a problem. Thus, in the present embodiment, a configuration in which the server 1 acquires the traveling plan of each of the vehicles 3 is employed. The server 1 sets a power transfer amount between the vehicle and the charging lane according to the traveling plan of each vehicle.

FIG. 4 is a diagram schematically illustrating an example of a configuration of each of the server 1 and the vehicle 3. The server 1 includes an application server 11, a database server 12, and a communication interface 13. The database server 12 includes a vehicle database 121, a charging lane database 122, and a traveling plan database 123.

The application server 11 includes a processor 111, such as a central processing unit (CPU), and a memory 112, such as a read-only memory (ROM) and a random access memory (RAM). The processor 111 is configured to execute predetermined arithmetic processing described in a program. The memory 112 stores the program executed by the processor 111. Further, the memory 112 temporarily stores data generated by execution of the program in the processor 111.

The application server 11 collects various pieces of information (described below) from the vehicles 3 via the communication interface 13 (an example of a "communicator" according to the present disclosure). The application server 11 may be configured to collect road information (for example, a road position and a slope), weather information (for example, weather and outside temperature), and the like, described below, from an external server (not shown). The application server 11 sets the power transfer amounts (including the power adjustment amounts) by the charging lanes 2 and the vehicles 3, based on the collected information and information (described below) stored in the database server 12. This processing will be described below in detail.

The vehicle database 121 stores various pieces of information associated with an identification number (a vehicle ID) for each vehicle. Specifically, a vehicle type, a year in which a vehicle is manufactured, a model, a specification (for example, power consumption, a power transfer method, or maximum transferrable power), a state (for example, a state of charge (SOC) of the battery 31, a deterioration state, or a full charge capacity), or the like is stored in the vehicle database 121 in association with the vehicle ID. Each vehicle 3 periodically sends the state of the vehicle 3 (for example, the SOC of the battery 31) to the application server 11.

The charging lane database 122 stores information, in which an identification number (a charging lane ID), a specification (for example, the power transfer method, or the maximum transferrable power), an installation place, and the like are associated with each other, for each charging lane 2.

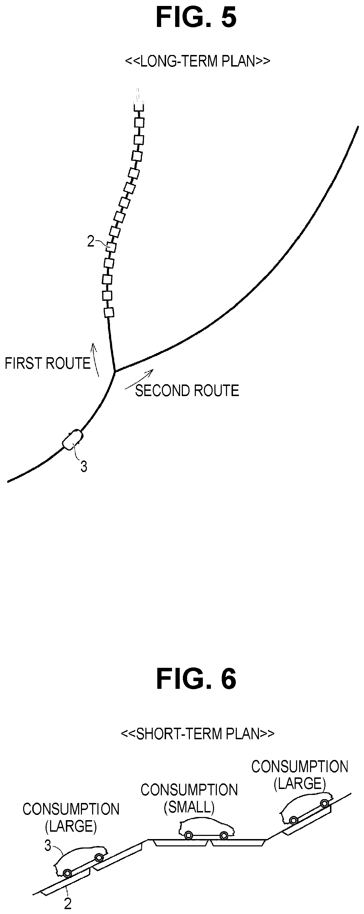

The traveling plan database 123 stores the traveling plan collected for each vehicle. Each vehicle 3 also periodically sends traveling plan to the application server 11. The traveling plan will be described in detail in FIGS. 5 and 6.

The vehicle 3 further includes, for example, a navigation system 35, an autonomous driving system (ADS) 36, a communication module 37, and an electronic control unit (ECU) 11.

The navigation system 35 includes a global positioning system (GPS) receiver. The GPS receiver specifies a position of the vehicle 3 based on radio waves from an artificial satellite (not shown). The navigation system 35 executes various navigation processes (for example, searching for a traveling route) using position information (GPS information) of the vehicle 3 specified by the GPS receiver.

The ADS 36 creates the traveling plan of the vehicle 3, generates a request for causing the vehicle 3 to travel according to the created traveling plan, and outputs the generated request to a vehicle platform (VP). Further, the ADS 36 receives a signal indicating a state (a vehicle state) of the VP from the VP and reflects the received signal in creating the traveling plan. Although an autonomously driven vehicle 3 having the ADS 36 mounted thereon is exemplified, the vehicle 3 may be manually driven by a driver.

The communication module 37 is an in-vehicle data communication module (DCM) and is configured to enable the ECU 38 and the server 1 to bidirectionally communicate.

The ECU 38 includes a processor and a memory. The ECU 38 controls each device (for example, the inverter 32) in the VP such that the vehicle 3 travels according to the traveling plan generated by the ADS 36.

### Traveling Plan

In the first embodiment, the server 1 collects the traveling plan of each of the vehicles 3. Then, for each vehicle, the server 1 estimates, based on the collected traveling plan, a power consumption amount or a surplus power amount of the vehicle during a period for which arithmetic processing is to be executed. The power consumption amount is a power amount discharged and consumed from the battery 31 according to, for example, a powering operation of the motor generator 33 or an operation of auxiliaries. The surplus power amount is a power amount generated according to a regenerative operation of the motor generator 33 and charging the battery 31.

A period for which arithmetic processing of the power consumption amount or the surplus power amount is to be executed is, hereinafter, referred to as a "target period". The target period may be a short period of several seconds to several tens of seconds, or a longer period of several minutes to several tens of minutes. Since the vehicle 3 is powering traveling for a large amount of time, an example in which the power consumption amount during the target period is estimated will be described below. The traveling plans are broadly classified into long-term plans and short-term plans.

FIG. 5 is a diagram for describing a long-term plan. The long-term plan is a traveling plan that influences the power consumption amount of the vehicle 3 over a long-term time span (for example, several minutes to several tens of minutes, or longer). A specific example of the long-term plan includes a destination of the vehicle 3 or a scheduled traveling route of the vehicle 3.

While the vehicle 3 is traveling, the charging lane 2 is not always installed. There are a route (a first route in FIG. 5) in which the charging lane 2 is installed and a route (a second route) in which the charging lane 2 is not installed. Each vehicle 3 sends the scheduled traveling route guided by the navigation system 35 to the server 1. The server 1 collects the scheduled traveling route from each vehicle 3. As such, the server 1 can estimate which vehicle 3 travels in which charging lane 2 at what timing. In other words, the server 1 can specify a combination (a correspondence relationship) between the charging lane 2 and the vehicle 3 in which power transfer is executed for each time.

As a long-term plan, the server 1 may further collect the weather information (for example, weather, outside temperature, a sunset time, or a sunrise time) regarding the scheduled traveling route of the vehicle 3. As such, it is possible to estimate the power consumption amount by the auxiliaries (for example, an air conditioner or a lighting device) during the target period.

FIG. 6 is a diagram for describing the short-term plan. The short-term plan is a traveling plan that influences the power consumption amount of the vehicle 3 over a short-term time span (for example, several seconds to several tens of seconds). A specific example of the short-term plan includes speed and acceleration of the vehicle 3, the current place of the vehicle 3, the accelerator opening degree (or the braking amount) of the vehicle 3, or a slope of the road at the current place of the vehicle 3, and the like. By collecting the short-term plans from the vehicles 3, the server 1 can estimate the power consumption amounts by the powering traveling of the vehicles 3 during the target period.

### Setting Power Transfer Amount

The server 1 estimates the power consumption amount for each vehicle 3 during the target period, and sets the power amount transferred between the vehicle 3 and the charging lane 2 corresponding to the vehicle 3 during the target period, based on the estimated power consumption amount.

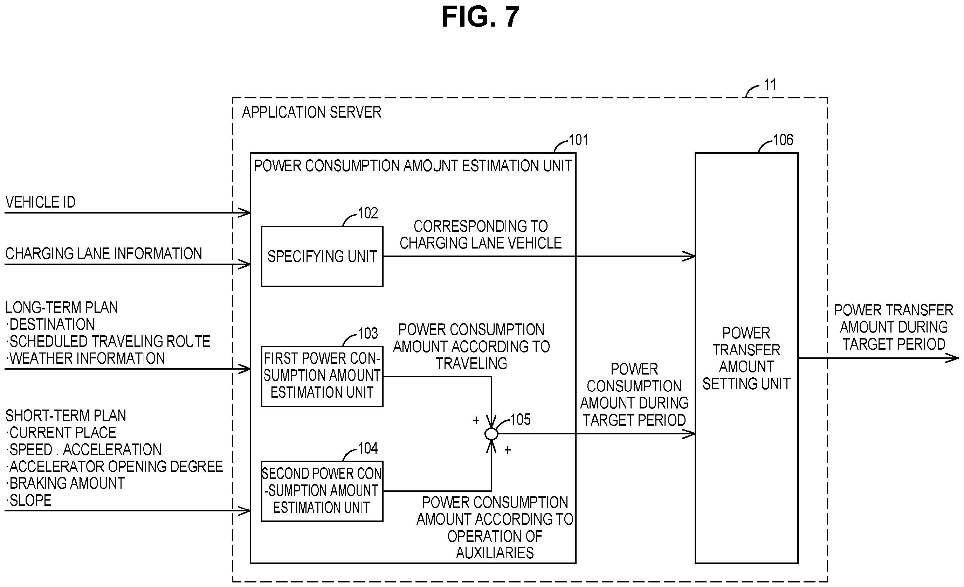

FIG. 7 is a functional block diagram of the application server 11 in the first embodiment. The application server 11 includes a power consumption amount estimation unit 101.

The power consumption amount estimation unit 101 acquires the vehicle ID, charging lane information, the long-term plan, and the short-term plan from each of the vehicles 3. As described above, the long-term plan can include, for example, the destination, the scheduled traveling route, and the weather information of each vehicle 3. The short-term plan can include, for example, the current place, the speed, the acceleration (deceleration), the accelerator opening degree, the braking amount, and the slope (a vehicle attitude) of each vehicle 3. The power consumption amount estimation unit 101 estimates the power consumption amount of each of the vehicles 3 based on the vehicle ID, the long-term plan, and the short-term plan during the target period.

More specifically, the power consumption amount estimation unit 101 includes a specifying unit 102, a first power consumption amount estimation unit 103, a second power consumption amount estimation unit 104, and an addition unit 105. The application server 11 further includes a power transfer amount setting unit 106.

With reference to the vehicle database 121 (see FIG. 2), the specifying unit 102 specifies the information, such as the vehicle type, the year in which the vehicle is manufactured, the vehicle model, and the specification (for example, power consumption) of each vehicle 3 from the vehicle ID. Further, the specifying unit 102 calculates a position of each vehicle 3 at each time based on the short-term plan and the long-term plan (for example, the current place and the scheduled traveling route). Further, with reference to the charging lane database 122, the specifying unit 102 specifies an installation position of each charging lane 2. As such, the specifying unit 102 can specify the correspondence relationship (that is, which vehicle 3 is traveling in which charging lane 2) between the charging lane 2 and the vehicle 3 during the target period. The specifying unit 102 outputs the specified correspondence relationship to the power transfer amount setting unit 106.

The first power consumption amount estimation unit 103 estimates the power consumption amount (a first power amount) for each vehicle 3 according to the powering traveling based on the short-term plan and the long-term plan during the target period. With reference to, for example, a map (not shown) indicating the correspondence relationship between each parameter regarding the powering traveling and the power consumption amount, the first power consumption amount estimation unit 103 can calculate the first power amount from each parameter. An example of the parameter regarding the powering traveling includes the speed, the acceleration, the accelerator opening degree, the braking amount, or the slope. The first power consumption amount estimation unit 103 outputs a estimation result of the first power amount during the target period to the addition unit 105.

The second power consumption amount estimation unit 104 estimates, for each vehicle 3, the power consumption amount (a second power amount) according to an operation of the auxiliaries based on the short-term plan and the long-term plan during the target period. With reference to, for example, a map (not shown) indicating the correspondence relationship between each parameter regarding the operation of the auxiliaries and the power consumption amount, the second power consumption amount estimation unit 104 can calculate the second power amount from each parameter. The parameter regarding the operation of the auxiliaries includes, for example, the current place, the scheduled traveling route, and the weather information. The second power consumption amount estimation unit 104 outputs an estimation result of the second power amount during the target period to the addition unit 105.

The addition unit 105 adds the first power amount (the power consumption amount according to the powering traveling during the target period) estimated by the first power consumption amount estimation unit 103 and the second power amount (the power consumption amount according to the operation of the auxiliaries during the target period) estimated by the second power consumption amount estimation unit 104. Then, the addition unit 105 outputs an added value to the power transfer amount setting unit 106 as the power consumption amount during the target period.

The power transfer amount setting unit 106 sets a combination of the vehicle 3 and the charging lane 2 in the corresponding relationship specified by the specifying unit 102 as an arithmetic target. The power transfer amount setting unit 106 sets the power amount to be transferred between the charging lane 2 and the vehicle 3 during the target period for each vehicle 3 based on the added value from the addition unit 105.

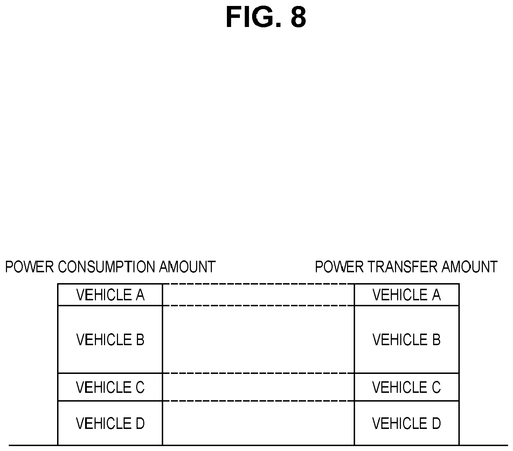

FIG. 8 is a diagram for describing arithmetic processing by the power transfer amount setting unit 106 in the first embodiment. In the first embodiment, the power transfer amount setting unit 106 sets the power transfer amount during the target period for each vehicle 3 to be equal to the power consumption amount during the target period.

FIG. 8 illustrates power transfer amounts set for four vehicles 3 (vehicles A to D). For each of the vehicles A to D, the power consumption amount and the power transfer amount during the target period are equal. This means that each of the vehicles A to D can deliver all of the power consumption amounts by the power transfer amount from the charging lane 2. As such, since there is no need to charge the battery 31 with an excessive power amount or discharge the battery 31 to take out an insufficient amount of power, the charging/discharging of the battery 31 is restricted. As a result, deterioration of the battery 31 can be prevented.

### Processing Flow

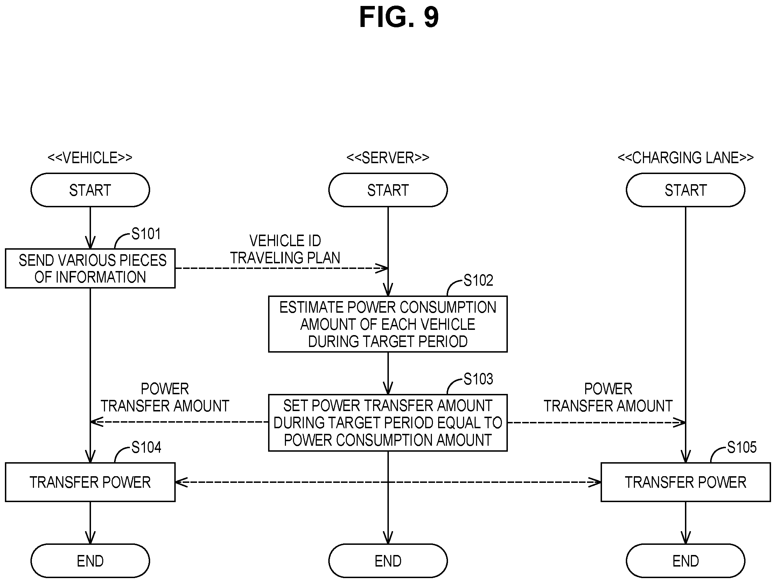

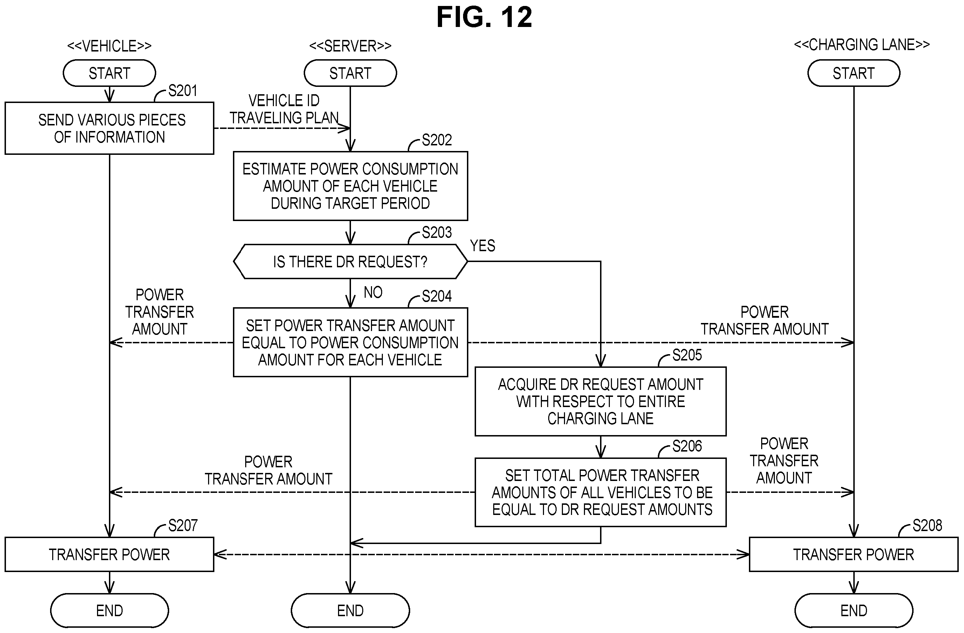

FIG. 9 is a flowchart illustrating processing procedures on setting of the power transfer amount in the first embodiment. The processing illustrated in this flowchart is executed when (for example, every predetermined cycle) a condition determined in advance is established. In the drawing, a left side illustrates processing executed by the vehicle 3 (the ECU 38), a center illustrates processing executed by the server 1 (the application server 11), and a right side illustrates processing executed by the charging lane 2 (the controller 22). Each step may be realized by software processing, but may be realized by hardware (an electric circuit). Hereinafter, a step is abbreviated as S. The same applies to a flowchart of FIG. 12 described below. For the sake of simplicity in FIG. 9, one vehicle is described as a representative example, but same processes are also executed for other vehicles.

In S101, the vehicle 3 sends various pieces of information, such as the vehicle ID, the long-term plan, and the short-term plan of the vehicle 3, to the server 1.

In S102, the server 1 estimates the power consumption amount during the target period based on the data received from the vehicle 3. Then, the server 1 sets the power transfer amount from the charging lane 2 to the vehicle 3 during the target period to match the power consumption amount of the vehicle 3 during the target period (S103). Since these processes are described in FIGS. 7 and 8, the description will not be repeated here.

The charging lane 2 and the vehicle 3 execute power transfer therebetween such that the power transfer amount set by the server 1 is transferred during the target period (S104, S105).

As above, in the first embodiment, for each vehicle 3, the power amount transferred from the charging lane 2 to the vehicle 3 during the target period is set to be equal to the power amount consumed during the target period. In other words, the power transfer amount is set to match a power balance between the power consumption amount and the power transfer amount (the power balance becomes approximately zero) during the target period for each vehicle 3. As such, there is no need to charge the battery 31 with an excessive power amount or discharge the battery 31 to take out an insufficient power amount. Further, it is also restricted that the power transfer amount is wasted because it is excessive with respect to the power consumption amount or that the traveling of the vehicle 3 is limited because the power transfer amount is insufficient with respect to the power consumption amount. Therefore, with the first embodiment, it is possible to appropriately set a power transfer amount in the non-contact power transfer system 300.

In the first embodiment, the power consumption amount has been described as an example. Each of the processes can be applied in the same manner to the surplus power amount generated according to the regenerative operation of the motor generator 33. Further, the same applies to a case where some vehicles consume power and some other vehicles regenerate power.

### Second Embodiment

### DR Request

As described in FIG. 1, the microgrid MG interconnected to the power system 91 is electrically connected to the power adjustment resources 6 (for example, the generator 61, the naturally fluctuating power source 62, the ESS 63, the EVSE 64, the charging lane 2). In a time range when the power supply and demand of the power system 91 is expected to be tight, the DR request for executing the power adjustment of the microgrid MG is output from the CEMS server 8 to each power adjustment resource 6. In the non-contact power transfer system 300 in a second embodiment, when the DR request is generated, the power transfer amount between the charging lanes 2 and the vehicles 3 is set based on the traveling plan and the DR request.

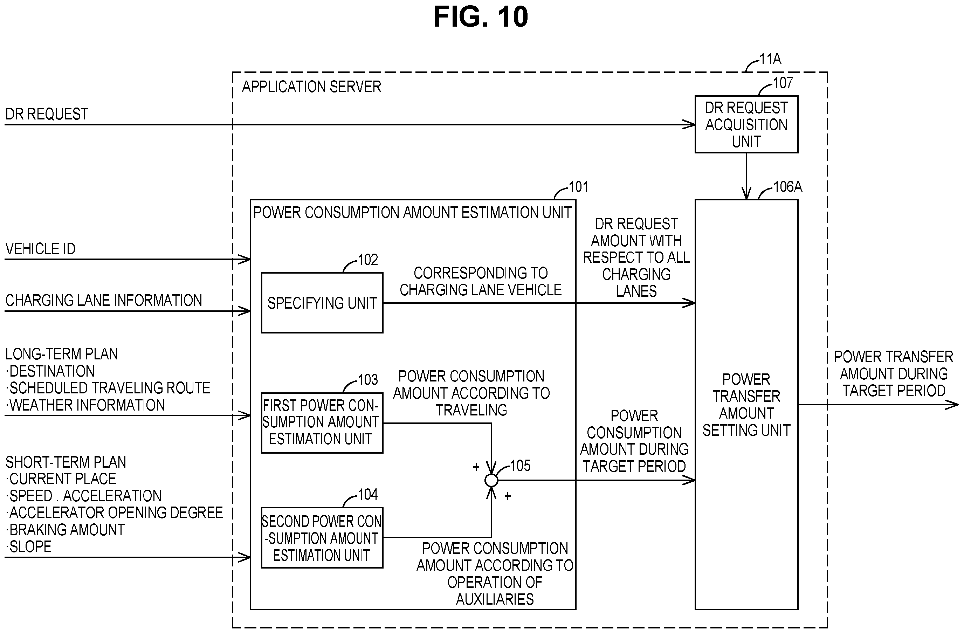

FIG. 10 is a functional block diagram of the application server 11A in the second embodiment. The application server 11A in the second embodiment differs from the application server 11 in the first embodiment in that a DR request acquisition unit 107 is further included and a power transfer amount setting unit 106A instead of the power transfer amount setting unit 106 is included in the former (see FIG. 7).

The DR request acquisition unit 107 acquires the DR request from the CEMS server 8 (see FIG. 1) to the non-contact power transfer system 300. More specifically, for all the charging lanes 2, the DR request acquisition unit 107 acquires a "DR request amount" that is a charging/discharging request amount for executing the power adjustment of the microgrid MG and outputs the DR request amount to the power transfer amount setting unit 106A.

When the DR request is generated, the power transfer amount setting unit 106A sets the total power amount transferred between the charging lanes 2 and the vehicles 3 to be equal to the DR request amount.

### Setting Power Transfer Amount

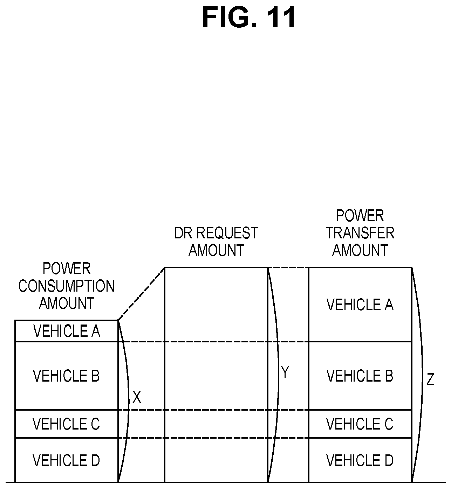

FIG. 11 is a diagram for describing arithmetic processing by the power transfer amount setting unit 106A in the second embodiment. In to the same manner as in the first embodiment (see FIG. 8), a situation where the power transfer amounts are set for the four vehicles 3 (the vehicles A to D) will be described as an example. A sum of the power consumption amounts of the vehicles A to D during the target period is referred to as X. On the other hand, it is assumed that the DR request amount for all of the charging lanes 2 is Y, and X differs from Y (in this example, Y is larger than X).

In the second embodiment, the power transfer amount setting unit 106A sets a total power amount Z transferred between the charging lanes 2 and the vehicles 3 to be equal to the DR request amount Y The setting of the total power amount Z is realized by distributing the DR request amount Y to the four vehicles A to D. As this distribution method, for example, the following method may be employed.

In an example illustrated in FIG. 11, the power transfer amount setting unit 106A sets the power transfer amount during the target period for the vehicles B to D to be equal to the power consumption amount during the target period. In this case, the vehicles B to D can deliver all of the power consumption amounts by the power transfer amount from the charging lane 2. As a result, in the same manner as in the first embodiment, it is possible to restrict the charging/discharging of the battery 31 and prevent deterioration of the battery 31.

On the other hand, the power transfer amount setting unit 106A sets the power transfer amount during the target period for the vehicle A to be larger than the power consumption amount during the target period. In this manner, although deterioration of the battery 31 may progress, it is possible to charge the battery 31 and restore the SOC thereof. For example, by selecting a vehicle having a battery 31 with a low SOC as the vehicle A, a travelable distance of the vehicle can be extended. The power transfer amount setting unit 106A may select a vehicle having the lowest SOC, or may select two or more vehicles having SOCs lower than a predetermined value.

The method of selecting the vehicle A is not limited to the method based on the SOC. The power transfer amount setting unit 106A may select a vehicle (for example, a vehicle for which a contract has been concluded in advance) determined in advance as the vehicle A. Further, the power transfer amount setting unit 106A may select, as the vehicle A, a vehicle in which deterioration of the battery 31 has not relatively progressed.

Although not shown, when the DR request is not generated, in the same manner as in the first embodiment (see FIG. 8), the power transfer amount setting unit 106A sets the power transfer amount to each of the vehicles A to D. In other words, the power transfer amount setting unit 106A sets the power transfer amounts for all the vehicles A to D during the target period to be equal to the power consumption amount.

### Processing Flow

FIG. 12 is a flowchart illustrating processing procedures on setting of the power transfer amount in the second embodiment. Processes of S201, S202 are same as those of S101, S102 in the first embodiment (see FIG. 9).

In S203, the server 1 determines whether the DR request has been received from the CEMS server 8. When no DR request has been received (NO in S203), the server 1 sets the power amount transferred between the charging lane 2 and the vehicle 3 during the target period to match the power consumption amount during the target period for each vehicle 3 (S204). Since this process is also the same as that of S103 in the first embodiment, the description thereof will not be repeated.

When the DR request has been received (YES in S203), the server 1 advances the process to S205, and acquires the DR request amount for the non-contact power transfer system 300 (all the charging lanes 2 and the vehicles 3) from the CEMS server 8. Further, the server 1 sets the total power amount transferred between the charging lanes 2 and the vehicles 3 during the target period to match the DR request amount during the target period. Since this process is described in FIG. 11 in detail, the description will not be repeated here.

After the execution of the process of S204 or S206, the charging lane 2 and the vehicle 3 execute power transfer therebetween such that the power transfer amount set by the server 1 is transferred during the target period (S207, S208).

As above, in the second embodiment, when the DR request is generated, the total power amount transferred between the charging lanes 2 and the vehicles 3 during the target period is set to match the power amount (the DR request amount) for which the power adjustment is requested during the target period by the DR request. In other words, when the DR requested is generated, the power transfer amount is set to match a power balance between the DR request amount and the power transfer amount (the power balance becomes approximately zero) during the target period for all the vehicles 3. As such, it is possible to sufficiently respond to the DR request using the vehicles 3 that are traveling. Therefore, with the second embodiment, it is possible to appropriately set the power transfer amount in the non-contact power transfer system 300.

Each process in the second embodiment can also be applied in the same manner when the surplus power amount is generated. Further, the same applies to a case where some vehicles consume power and some other vehicles regenerate power.

The embodiment disclosed herein needs to be considered as illustrative in all points and not restrictive. The scope of the present disclosure is shown not by the above description of the embodiments but by the claims, and is intended to include meanings equivalent to the claims and all modifications within the scope thereof.

## Claims

1. A server (1) configured to manage a plurality of power transfer devices (2) configured to execute a non-contact power transfer with vehicles (3) that are traveling, the server (1) comprising:
a communicator (13) configured to acquire a traveling plan by communicating with the vehicles (3); and
a processor (111) configured to set power transferred between the vehicles (3) and the power transfer devices (2),
wherein the processor (111) is configured to
for each of the vehicles (3), estimate a power change amount according to power consumption or power regeneration of a specific vehicle (3) among the vehicles (3) that are traveling based on the traveling plan, and
set a power transfer amount between the specific vehicle (3) and a corresponding power transfer device (2) such that the power transfer amount corresponds to the power change amount, and
the corresponding power transfer device (2) is a device corresponding to the specific vehicle (3) among the power transfer devices (2).

2. The server (1) according to claim 1, wherein the processor (111) is configured to:
estimate, for each of the vehicles (3), a power consumption amount according to powering traveling of the specific vehicle (3) based on the traveling plan; and
set a power transmission amount from the corresponding power transfer device (2) to the specific vehicle (3) such that the power transmission amount corresponds to the power consumption amount.

3. The server (1) according to claim 1, wherein the processor (111) is configured to:
estimate, for each of the vehicles (3), a surplus power amount according to regenerative power generation of the specific vehicle (3) based on the traveling plan; and
set a power reception amount of the corresponding power transfer device (2) from the specific vehicle (3) such that the power reception amount corresponds to the surplus power amount.

4. The server (1) according to any one of claims 1 to 3, wherein the traveling plan includes information on at least one of speed, acceleration, an accelerator opening degree, a braking amount, a scheduled traveling route, and a gradient of the scheduled traveling route.

5. The server (1) according to any one of claims 1 to 4, wherein:
the power transfer devices (2) are electrically connected to a power grid interconnected to a power system;
the processor (111) is configured to set the power transfer amount to correspond to the power change amount in a case where a demand response request for executing a power adjustment of the power grid is not generated during a specific time range; and
the specific time range is a time range when power supply and demand of the power system is tight.

6. The server (1) according to claim 5, wherein the processor (111) is configured to:
acquire, in a case where the demand response request is generated, a power request amount for which the power adjustment is requested to the power transfer devices (2) to execute the power adjustment of the power grid; and
set, in the case where the demand response request is generated, a total power amount transferred between the vehicles (3) and the power transfer devices (2) such that the total power amount corresponds to the power request amount.

7. A power transfer system (300) comprising:
the server (1) according to claim 1; and
the power transfer devices (2) according to any one of claims 1 to 6.

8. A power transfer method between vehicles (3) that are traveling and power transfer devices (2) in a non-contact manner, the power transfer method comprising:
acquiring, for each of the vehicles (3), a traveling plan for a specific vehicle (3) among the vehicles (3);
estimating a power change amount according to power consumption or power regeneration of the specific vehicle (3) that is traveling based on the traveling plan; and
setting a power transfer amount between the specific vehicle (3) and a corresponding power transfer device (2) such that the power transfer amount corresponds to the power change amount, wherein
the corresponding power transfer device (2) is a device corresponding to the specific vehicle (3) among the power transfer devices (2).
